# EUROPEAN PATENT APPLICATION

(11) **EP 4 750 222 A1**
(43) Date of publication of application: **27.05.2026**
(21) Application number: 25169349.5
(22) Date of filing: 09.04.2025
(51) Int. Cl.: H05B 45/10, H05B 45/30, H05B 47/175, F21V 33/00, F21S 9/02, H02J 7/00, F21S 4/10, F21V 23/00

(54) **RECHARGEABLE MULTIFUNCTIONAL CONTROLLER FOR LED LIGHT STRING**

(30) Priority: 25.11.2024 US 202418959471
(71) Applicant: Liang, Ting, Shangqiu, Henan 476000 (CN)
(72) Inventor: Liang, Ting, Shangqiu, Henan 476000 (CN)
(74) Representative: Cleanthous, Marinos

(57) **Abstract**

The present disclosure provides a rechargeable multifunctional controller for an LED light string comprising a battery and a circuit board arranged inside a hollow shell (1). The battery is set as a rechargeable lithium battery, and power is supplied for the battery through a charging port (4) arranged at one end of a control device.

## Description

### BACKGROUND

### 1. Technical Field text

The present disclosure relates to an LED light string control device, and more specifically, relates to a rechargeable multifunctional controller for an LED (Light Emitting Diode) light string.

### 2. Background Information

The LEDs, namely light emitting diodes, are widely used in the fields of decoration and lighting because of low working voltage, long service life, small size, adjustable brightness and color when in use and other characteristics. The LED lighting technology has matured, and the application scope is constantly extended due to the characteristics of energy saving, environmental protection and high efficiency.

At present, the existing LED light string usually passes through a connecting socket, and a controller is arranged between the light string and the socket. The light string supplies power through the socket, and the lighting state of the light string is changed by the connected controller. Power supply equipment of the LED light string in the above-mentioned scheme is a socket, resulting in small setting range and fixed setting position. The lighting and decoration requirements in a small range or outdoors cannot be met. Moreover, the controller connected with the light string has few functions and can only control the on-off and flicker of the light string, so the overall functionality is low. The power supply equipment can be changed into a battery, but the overall capacity of the battery is low, so that the lighting time of the LED light string is short. Moreover, after the battery is used up, environmental pollution is caused possibly, and the using effect is not good. Moreover, the light string controller in the market only has the function of controlling the light string. If lighting of the light string is to be realized, an additional power supply needs to be connected, so that the overall volume is increased, and the controller is inconvenient to move and use.

### BRIEF SUMMARY

Aiming at the disadvantages in the prior art, the present disclosure aims to provide a rechargeable multifunctional controller for an LED light string. The rechargeable multifunctional controller is convenient to connect, good in using effect and high in functionality and can carry out lighting control on the light string.

In order to achieve the above-mentioned purpose, the present disclosure provides the following technical scheme. A rechargeable multifunctional controller for an LED includes a shell and a cover body. A cavity is formed in the interior of the shell. The cavity is internally provided with a control device. The control device includes a battery and a circuit board electrically connected with the battery. One end of the control device is provided with a charging port. The charging port is electrically connected with the circuit board. The charging port is configured to supply power for the battery through the circuit board. The other end of the control device is also provided with a connector. The connector is used for connecting the light string.

Through further arrangement of the present disclosure, the circuit board includes a plurality of button modules and a plurality of light-emitting modules. A surface of the shell is also provided with a display module. The display module includes a plurality of light holes and a display cover plate arranged on the light holes. The positions of the light holes are matched with those of the light-emitting modules on the circuit board.

Through further arrangement of the present disclosure, one end of the cover body is provided with a rotating shaft. The other end of the cover body is provided with a hook piece. One end of the shell is provided with an inserted rod, and a clamping slot is formed in the other end of the shell. The position of the inserted rod is matched with that of the rotating shaft. The position of the hook piece is matched with that of the inserted rod.

Through further arrangement of the present disclosure, the connector includes a connecting part arranged at the bottom of the shell and a conductive part arranged inside the connecting part. The conductive part includes an electrified base and a connecting plug arranged on the electrified base. The charging base is electrically connected with the battery inside the shell.

Preferably, a thread groove is formed in the periphery of the connecting part, and the connecting part and the conductive part are concentrically and coaxially distributed.

Preferably, the position of the connecting plug is matched with the position of a circle center of the electrified base.

Through further arrangement of the present disclosure, the button modules include a timing button and a control button, and the control button and the timing button are configured to control the battery inside the cavity through the circuit board.

Through further arrangement of the present disclosure, the joint of the cover body and the shell is also provided with a rubber ring, and the outer diameter of the rubber ring is matched with the inner diameter of the shell.

Through the adoption of the above-mentioned technical scheme, the present disclosure has the following beneficial effects. Firstly, A battery and a circuit board are arranged inside a hollow shell. The battery is set as a rechargeable lithium battery, and power is supplied for the battery through a charging port arranged at one end of the control device, so that the problem that the battery needs to be replaced frequently when the battery is out of power is avoided. The single battery can be recycled, so that the whole service time is prolonged. Moreover, the other end of the control device is provided with a connector, and the LED light string needing to be controlled is electrically connected with the controller through the connector. Meanwhile, the control of the controller for the light string is realized by button modules on the circuit board, so that the using effect is improved.

Secondly, further, in the using process of the device, in order to facilitate the connection of the controller and the LED light string, the connector is arranged at one end of the controller. The connector includes a connecting part arranged at the bottom of the shell and a conductive part arranged inside the connecting part. A thread groove is formed in the periphery of the connecting part. The connecting part can be detachably connected with the LED string through the thread groove, and the battery can supply power for the LED light string through the conductive part after the LED light string is connected with the controller, so that the connection strength between the light string and the device is improved while circuit smoothness is ensured. Further, the position of the connecting plug is matched with the position of a circle center of the electrified base, so the relative positions of the connecting plug and an inserted part of the light string remain unchanged in the process that the inserted part of the light string is rotatably connected with the connector. Moreover, the inserted part and the connector are set to be circular, and the rotation of the inserted part and the connector becomes into movement in the vertical direction through the thread groove, so that the connection accuracy is high, and the controller can be connected with different specifications of light strings.

Thirdly, meanwhile, an upper end of the shell is provided with a cover body, and one end of the cover body is provided with a rotating shaft. The other end of the cover body is provided with a hook piece. One end of the shell is provided with an inserted rod, and a clamping slot is formed in the other end of the shell. The position of the inserted rod is matched with that of the rotating shaft, and the position of the hook piece is matched with that of the inserted rod. The cover body can rotate on the shell, and can be fixed with the shell through the hook piece, so that the charging port is prevented from being exposed outside to be damaged. Moreover, the joint of the cover body and the shell is also provided with a rubber ring, and the outer diameter of the rubber ring is matched with the inner diameter of the shell, so that the shell 1 is sealed by the cover body after the cover body is closed to prevent entry of moisture, the service life of the controller is prolonged, and the safety in the using process is improved.

Fourthly, moreover, in order to facilitate to control the light string by the controller and enhance the performance of man-machine interaction, the button modules is provided with a timing button and a control button. Meanwhile, the light holes for emitting light of the light-emitting module of the circuit board are also formed in the surface of the shell. Specifically, the control button is used for controlling the on-off and flicker states of the LED light string. The lighting number of the light-emitting modules can be actively changed according to remaining power inside the current battery, and the remaining power is displayed on the display module correspondingly, so that a worker can visually know the current state of the remaining power of the controller. Meanwhile, the lighting time of the LED light string is controlled by a timing switch. In order to prevent that the remaining power of the battery cannot support the set lighting time of the LED light string, the controller can convert the remaining power of the battery into the lighting time for operating the LED light string. The allowable lighting time corresponds to the light holes inside the display module, and the worker can know the maximum lighting time of the current LED light string conveniently, so that the man-machine interaction effect is good. Moreover, the controller can be connected with different specifications of LED light strings. The LED light strings are different in power consumption. The controller can calculate the decrease of the power in a fixed time period, so that the power consumption efficiency of the currently connected LED light string is calculated. Meanwhile, during the lighting process of the light string, the light-emitting modules can emit different colors of light according to the state of the battery, so that the worker obtains information and controls the controller. Further, in order to control the lighting time of the LED light string in the using process, the lighting time of the LED light string is controlled by the timing switch. Meanwhile, the remaining power inside the battery is detected. If the lighting time of the LED light string allowed by the remaining power inside the current battery is smaller than the set lighting time, namely the remaining power cannot meet a current timing task, the controller informs the worker of a charging task. Meanwhile, in order to light the LED light string in limited time, the controller calculates the lighting time of the LED light string, namely the time of outputting the power output by the current battery. If the time of outputting the power is smaller than the set time, the current lighting time is judged to be smaller than a set value, and the controller controls the LED light string to continue to light. On the contrary, the lighting time is judged to reach the set value, the power output is turned off by the controller, and the LED light string is turned off.

### BRIEF DESCRIPTION OF THE DRAWINGS

FIG. 1 is a specific structural schematic diagram of a rechargeable multifunctional controller for an LED light string in an embodiment of the present disclosure.
FIG. 2 is an exploded view of a rechargeable multifunctional controller for an LED light string in an embodiment of the present disclosure.
FIG. 3 is a sectional view of a rechargeable multifunctional controller for an LED light string after the controller is connected with the light string in an embodiment of the present disclosure.

Reference signs in attached figures: 1, shell; 2, cover body; 3, control device; 31, battery; 32, circuit board; 33, button module; 34, light-emitting module; 35, timing button; 36, control button; 4, charging port; 5, connector; 51, connecting part; 52, conductive part; 53, electrified base; 54, connecting plug; 55, thread groove; 6, display module; 61, light hole; 62, display cover plate; 7, rotating shaft; 8, hook piece; 9, inserted rod; 10, clamping slot; and 11, rubber ring.

### DETAILED DESCRIPTION OF THE DRAWINGS AND THE PRESENTLY PREFERRED EMBODIMENTS

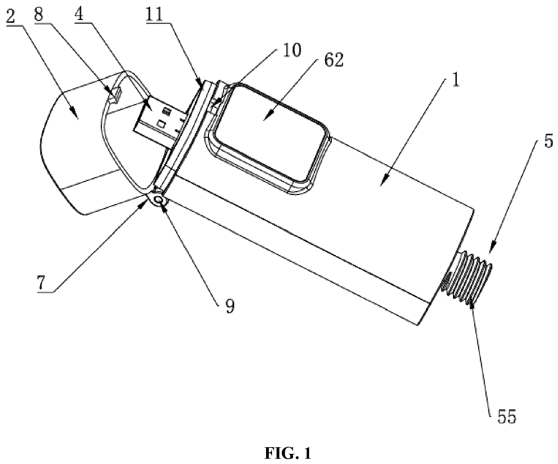

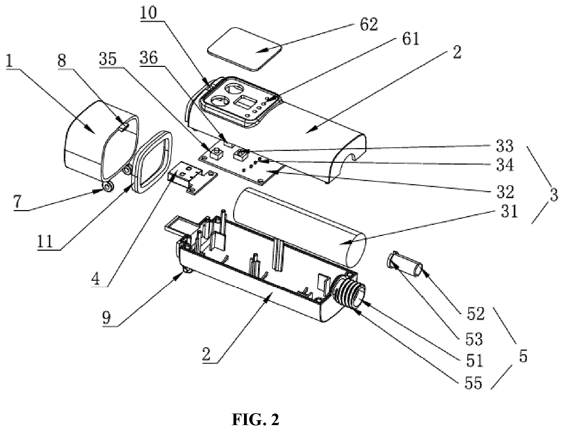

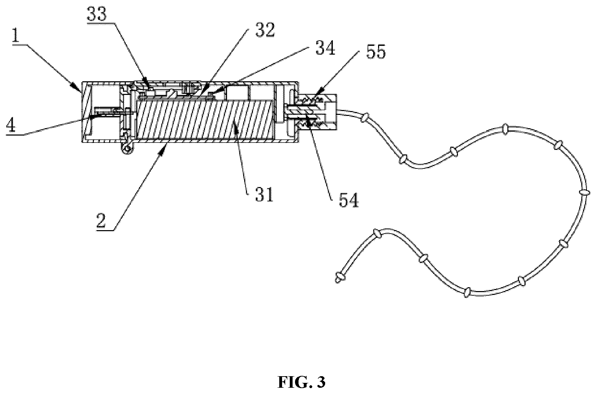

Referring to FIG. 1 to FIG. 3, a rechargeable multifunctional controller for an LED light string in an embodiment of the present disclosure is further described.

For ease of illustration, spatially relative terms such as "upper", "lower", "left" and "right" are used in the embodiments to illustrate the relationship of one element or feature relative to another element or feature shown in the figures. It should be understood that the spatially relative terms are intended to include different orientations in use or operation in addition to the orientation of the device described in the figures. For example, if the device in the figures is inverted, elements recited as being "under" other elements or features are located "on" other elements or features. Therefore, the exemplary term "lower" may include both upper and lower orientations. The device may also be located in other different ways (rotating by 90 degrees or at other orientations), and the spatially relative descriptions used herein are explained accordingly.

Moreover, relational terms such as "first" and "second" are only used to distinguish component with the same name from one another, and do not necessarily require or imply that any actual relationship or sequence exists between these components.

A rechargeable multifunctional controller for an LED includes a shell 1 and a cover body 2. A cavity is formed in the interior of the shell. The cavity is internally provided with a control device 3. The control device 3 includes a battery 31 and a circuit board 32 electrically connected with the battery 31. One end of the control device 3 is provided with a charging port 4. The charging port 4 is electrically connected with the circuit board 32. The charging port 4 is configured to supply power for the battery 31 through the circuit board 32. The other end of the control device 3 is also provided with a connector 5. The connector 5 is used for connecting the light string.

The circuit board 32 includes a plurality of button modules 33 and a plurality of light-emitting modules 34. A surface of the shell 1 is also provided with a display module 6. The display module 6 includes a plurality of light holes 61 and a display cover plate 62 arranged on the light holes 61. The positions of the light holes 61 are matched with those of the light-emitting modules 34 on the circuit board 32.

One end of the cover body 2 is provided with a rotating shaft 7. The other end of the cover body 2 is provided with a hook piece 8. One end of the shell 1 is provided with an inserted rod 9, and a clamping slot 10 is formed in the other end of the shell 1. The position of the inserted rod 9 is matched with that of the rotating shaft 7. The position of the hook piece 8 is matched with that of the inserted rod 9.

The connector 5 includes a connecting part 51 arranged at the bottom of the shell 1 and a conductive part 52 arranged inside the connecting part 51. The conductive part 52 includes an electrified base 53 and a connecting plug 54 arranged on the electrified base 53. The charging base is electrically connected with the battery 31 inside the shell 1.

Preferably, a thread groove 55 is formed in the periphery of the connecting part 51, and the connecting part 51 and the conductive part 52 are concentrically and coaxially distributed.

Preferably, the position of the connecting plug 54 is matched with the position of a circle center of the electrified base 53.

The button modules 33 include a timing button 35 and a control button 36, and the control button 36 and the timing button 35 are configured to control the battery 31 inside the cavity through the circuit board 32.

The joint of the cover body 2 and the shell 1 is also provided with a rubber ring 11, and the outer diameter of the rubber ring 11 is matched with the inner diameter of the shell 1.

A battery 31 and a circuit board 32 are arranged inside a hollow shell 1. The battery 31 is set as a rechargeable lithium battery, and power is supplied for the battery 31 through a charging port 4 arranged at one end of the control device 3, so that the problem that the battery needs to be replaced frequently when the battery is out of power is avoided. The single battery 31 can be recycled, so that the whole service time is prolonged. Moreover, the other end of the control device 3 is provided with a connector 5, and the LED light string needing to be controlled is electrically connected with the controller through the connector 5. Meanwhile, the control of the controller for the light string is realized by button modules 33 on the circuit board 32, so that the using effect is improved.

Further, in the using process of the device, in order to facilitate the connection of the controller and the LED light string, the connector 5 is arranged at one end of the controller. The connector 5 includes a connecting part 51 arranged at the bottom of the shell 1 and a conductive part 52 arranged inside the connecting part 51. A thread groove 55 is formed in the periphery of the connecting part 51. The connecting part 51 can be detachably connected with the LED string through the thread groove 55, and the battery 31 can supply power for the LED light string through the conductive part 52 after the LED light string is connected with the controller, so that the connection strength between the light string and the device is improved while circuit smoothness is ensured. Further, the position of the connecting plug 54 is matched with the position of a circle center of the electrified base 53, so the relative positions of the connecting plug 54 and an inserted part of the light string remain unchanged in the process that the inserted part of the light string is rotatably connected with the connector. Moreover, the inserted part and the connector are set to be circular, and the rotation of the inserted part and the connector becomes into movement in the vertical direction through the thread groove 55, so that the connection accuracy is high, and the controller can be connected with different specifications of light strings.

Meanwhile, an upper end of the shell 1 is provided with a cover body 2, and one end of the cover body 2 is provided with a rotating shaft 7. The other end of the cover body 2 is provided with a hook piece 8. One end of the shell 1 is provided with an inserted rod 9, and a clamping slot 10 is formed in the other end of the shell 1. The position of the inserted rod 9 is matched with that of the rotating shaft 7, and the position of the hook piece 8 is matched with that of the inserted rod 9. The cover body 2 can rotate on the shell 1, and can be fixed with the shell 1 through the hook piece 8, so that the charging port is prevented from being exposed outside to be damaged. Moreover, the joint of the cover body 2 and the shell 1 is also provided with a rubber ring 11, and the outer diameter of the rubber ring 11 is matched with the inner diameter of the shell 1, so that the shell 1 is sealed by the cover body 2 after the cover body 2 is closed to prevent entry of moisture, the service life of the controller is prolonged, and the safety in the using process is improved.

Moreover, in order to facilitate to control the light string by the controller and enhance the performance of man-machine interaction, the button modules 33 is provided with a timing button 35 and a control button 36. Meanwhile, the light holes 61 for emitting light of the light-emitting module 34 of the circuit board 32 are also formed in the surface of the shell 1. Specifically, the control button 36 is used for controlling the on-off and flicker states of the LED light string. The lighting number of the light-emitting modules 34 can be actively changed according to remaining power inside the current battery 31, and the remaining power is displayed on the display module 6 correspondingly, so that a worker can visually know the current state of the remaining power of the controller. Meanwhile, the lighting time of the LED light string is controlled by a timing switch. In order to prevent that the remaining power of the battery 31 cannot support the set lighting time of the LED light string, the controller can convert the remaining power of the battery 31 into the lighting time for operating the LED light string. The allowable lighting time corresponds to the light holes 61 inside the display module 6, and the worker can know the maximum lighting time of the current LED light string conveniently, so that the man-machine interaction effect is good. Moreover, the controller can be connected with different specifications of LED light strings. The LED light strings are different in power consumption. The controller can calculate the decrease of the power in a fixed time period, so that the power consumption efficiency of the currently connected LED light string is calculated. Meanwhile, during the lighting process of the light string, the light-emitting modules 34 can emit different colors of light according to the state of the battery 31, so that the worker obtains information and controls the controller. Further, in order to control the lighting time of the LED light string in the using process, the lighting time of the LED light string is controlled by the timing switch. Meanwhile, the remaining power inside the battery 31 is detected. If the lighting time of the LED light string allowed by the remaining power inside the current battery 31 is smaller than the set lighting time, namely the remaining power cannot meet a current timing task, the controller informs the worker of a charging task. Meanwhile, in order to light the LED light string in limited time, the controller calculates the lighting time of the LED light string, namely the time of outputting the power output by the current battery 31. If the time of outputting the power is smaller than the set time, the current lighting time is judged to be smaller than a set value, and the controller controls the LED light string to continue to light. On the contrary, the lighting time is judged to reach the set value, the power output is turned off by the controller, and the LED light string is turned off.

The foregoing descriptions are merely better embodiments of the present disclosure, but are not intended to limit the present disclosure. Common variation and replacement made by those skilled in the art within the scope of the technical scheme of the present disclosure should be included in the protection scope of the present disclosure.

## Claims

1. A rechargeable multifunctional controller for an LED (Light Emitting Diode) light string, comprising a shell (1) and a cover body (2), and a cavity being formed in the interior of the shell (1), wherein the cavity is internally provided with a control device (3), the control device (3) comprises a battery (31) and a circuit board (32) electrically connected with the battery (31), one end of the control device (3) is provided with a charging port (4), the charging port (4) is electrically connected with the circuit board (32), the charging port (4) is configured to supply power for the battery (31) through the circuit board (32), the other end of the control device (3) is also provided with a connector (5), and the connector (5) is used for connecting the light string.

2. The rechargeable multifunctional controller for an LED light string according to claim 1, wherein the circuit board (32) comprises a plurality of button modules (33) and a plurality of light-emitting modules (34), a surface of the shell (1) is also provided with a display module (6), the display module (6) comprises a plurality of light holes (61) and a display cover plate (62) arranged on the light holes (61), the positions of the light holes (61) are matched with those of the light-emitting modules (34) on the circuit board (32).

3. The rechargeable multifunctional controller for an LED light string according to claim 1, wherein one end of the cover body (2) is provided with a rotating shaft (7), the other end of the cover body (2) is provided with a hook piece (8), one end of the shell (1) is provided with an inserted rod (9), a clamping slot (10) is formed in the other end of the shell (1), the position of the inserted rod (9) is matched with that of the rotating shaft (7), and the position of the hook piece (8) is matched with that of the inserted rod (9).

4. The rechargeable multifunctional controller for an LED light string according to claim 1, wherein the connector (5) comprises a connecting part (51) arranged at the bottom of the shell (1) and a conductive part (52) arranged inside the connecting part (51), the conductive part (52) comprises an electrified base (53) and a connecting plug (54) arranged on the electrified base (53), and the charging base is electrically connected with the battery (31) inside the shell (1).

5. The rechargeable multifunctional controller for an LED light string according to claim 4, wherein a thread groove (55) is formed in the periphery of the connecting part (51), and the connecting part (51) and the conductive part (52) are concentrically and coaxially distributed.

6. The rechargeable multifunctional controller for an LED light string according to claim 4, wherein the position of the connecting plug (54) is matched with the position of a circle center of the electrified base (53).

7. The rechargeable multifunctional controller for an LED light string according to claim 1, wherein the button module (33) is provided with a timing button (35) and a control button (36), and the control button (36) and the timing button (35) are configured to control the battery (31) inside the cavity through the circuit board (32).

8. The rechargeable multifunctional controller for an LED light string according to claim 1, wherein the joint of the cover body (2) and the shell (1) is also provided with a rubber ring (11), and the outer diameter of the rubber ring (11) is matched with the inner diameter of the shell (1).
